# EUROPEAN PATENT SPECIFICATION

(11) **EP 3 322 574 B1**
(45) Date of publication and mention of the grant of the patent: **07.08.2019**
(21) Application number: 16741280.8
(22) Date of filing: 14.07.2016
(51) Int. Cl.: B29C 67/00, B29C 35/08, A61C 13/00

(54) **METHOD AND APPARATUS FOR FORMING THIN LAYERS OF SLURRIES FOR ADDITIVE MANUFACTURING**
VERFAHREN UND VORRICHTUNG ZUR HERSTELLUNG DÜNNER SCHICHTEN VON SCHLÄMMEN FÜR ADDITIVE MANUFACTURING
PROCÉDÉ ET APPAREIL DE FORMATION DE COUCHES MINCES DE BARBOTINES POUR FABRICATION ADDITIVE

(30) Priority: 15.07.2015 NL 2015171
(43) Date of publication of application: 23.05.2018
(73) Proprietor: Admatec Europe B.V., 1822 CD Alkmaar (NL)
(72) Inventor: OPSCHOOR, Jan, 1755 LE Petten (NL); KOOTER, Johannes Cornelis Maria, 1755 LE Petten (NL); BERKEVELD, Louis David, 1755 LE Petten (NL)
(74) Representative: Nederlandsch Octrooibureau
(86) International application number: PCT/EP2016/066794
(87) International publication number: WO 2017/009426

(56) References cited:
- EP-A1- 2 151 214
- WO-A1-2014/006399
- JP-A- 2009 286 645
- US-A1- 2013 292 862

## Description

### Field of the invention

The present invention relates to a method for additive manufacturing of a three dimensional object, comprising manufacturing the object by repeatedly providing a predetermined amount of slurry as a layer on a substrate and curing the layer onto the object being formed. In a further aspect, the present invention relates to an additive manufacturing apparatus for providing a three dimensional object, comprising an exposure unit arranged to cure a layer of slurry onto an object being formed, a substrate arranged to receive a predetermined amount of slurry and to position the predetermined amount of slurry to an exposure position associated with the exposure unit.

### Prior art

US patent publication US2013/292863 discloses an additive manufacturing apparatus having improvements with respect to part separation from the image plate. A cure inhibiting layer is provided on a top surface of the image plate, which layer is e.g. made of poly-dimethyl siloxane, PDMS.

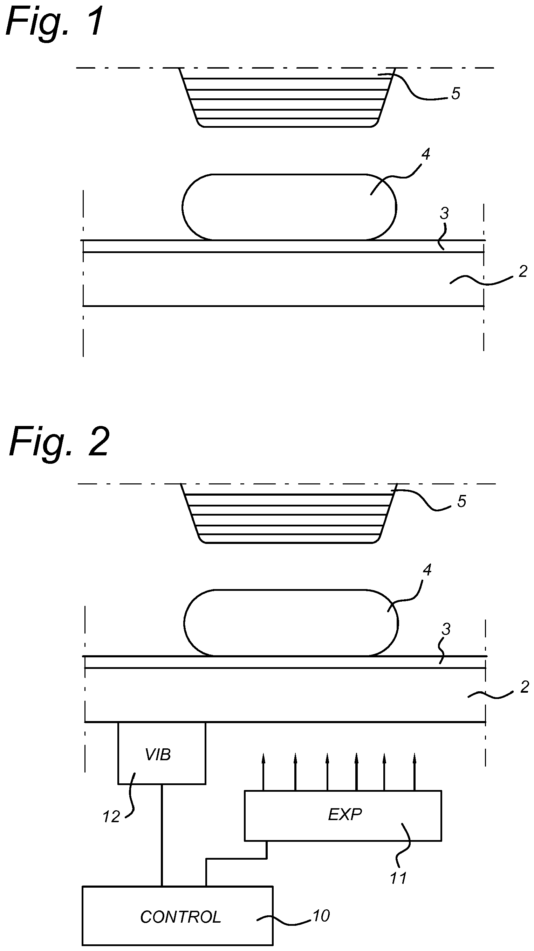

International patent publication WO2014/006399 discloses an additive manufacturing apparatus of the type where the object being formed (the 'build') is submerged in a photo-reactive substance. A light transmissive member is provided for solidifying the substance using exposure to light. In one embodiment, the light transmissive member is a transparent cylinder shaped component, which can 'roll' over the object being formed (Fig. 1 and 2 being y-plane and x-plane sectional views, respectively, of the apparatus).

European patent publication EP-A-2 151 214 discloses the use of a slurry having a binder, photo-polymerisation initiator and a filler, which is used for additive manufacturing of dental elements. The additive manufacturing apparatus disclosed is of the type where the object being formed is submerged in the slurry.

US patent publication US2011/0309554 discloses a device for processing a light-polymerizable material for building up an object in layers. In an embodiment the device comprises a rotatable disposed vat, a build platform disposed above the vat for building up the object, a feed device for feeding light-polymerizable material into a bottom of the vat, a light modulator and a further exposure unit below and above the build platform, respectively.

### Summary of the invention

The present invention seeks to provide an improved method and apparatus for additive manufacturing, especially when thin layers of slurry need to be used because of the composition of the slurry (and thus of the eventual three dimensional object).

According to the present invention, a method according to the preamble defined above is provided, wherein a slurry repellant layer is provided on a surface of the substrate, and the method further comprises pressing the object being formed into the predetermined amount of slurry until a desired thickness of the layer for a next additive manufacturing step is reached, and agitating the predetermined amount of slurry during pressing of the object being formed into the predetermined amount of slurry. The slurry repellant layer in combination with the agitating of the slurry has the effect that the slurry can be pushed away more easily by the thus far formed object, needing less force and lowering the chance of damage to the already formed layers of the object. Especially when thin layers of slurry to be exposed are needed (e.g. when using a less transparent slurry composition), or when highly viscous slurry compositions are used this can be very advantageous in providing a high quality three dimensional object.

In a further aspect of the present invention, an additive manufacturing apparatus is provided as defined above, wherein the substrate comprises a slurry repellant layer on a surface of the substrate, an object holder for holding the object being formed, wherein the object holder is arranged to press the object being formed towards the substrate into the predetermined amount of slurry until a desired thickness of the layer for a next additive manufacturing step is reached, and an agitator system arranged to agitate the predetermined amount of slurry. Again, especially when thin layers are needed during manufacturing of the three dimensional object, and/or when highly viscous slurry compositions are used, the forces needed to be exerted by the object holder are lowered, resulting in a more reliable and robust additive manufacturing apparatus.

Further possible features are possible to be added to the method and apparatus of the present invention, separate or in combination, as described in the appended claims and explained in the description of exemplary embodiments below.

### Short description of drawings

The present invention will be discussed in more detail below, using a number of exemplary embodiments, with reference to the attached drawings, in which
Fig. 1 shows a cross sectional view of a three dimensional object being manufactured using additive manufacturing;
Fig. 2 shows the cross sectional view of Fig. 1 including further components of an additive manufacturing apparatus according to an embodiment of the present invention.

### Detailed description of exemplary embodiments

The present invention is especially applicable to additive manufacturing techniques for making three dimensional objects layer by layer, using exposure of a layer of curable material, e.g. in the form of a slurry. An object is then created layer by layer by subsequently positioning the object to be formed in contact with a new fresh layer of slurry, and exposing/curing that new layer.

For specific applications, the slurry may comprise a curable resin as well as a high quality oxide ceramic, which is not absorbing the exposure radiation (e.g. originating from a digital light processor (DLP)), as a result of which the entire layer can be exposed and thus cured onto the object being formed.

When other materials are used in the slurry which are (more or less) absorbing the radiation used for exposure, additive manufacturing is hampered as the penetration depth and efficiency of the exposure radiation used are diminished. This type of layer by layer additive manufacturing can then only be successful if very thin layers of the photosensitive slurry are used.

A problem then also encountered is that the slurries that are desirable to be used are usually highly viscous. In order to get the object to be formed (last layer formed) in contact with a new layer of slurry, and with the right amount of thickness of that layer to allow curing of the entire layer (i.e. a through cure), the object to be formed has to be pressed into the viscous slurry with force. When the forces then created are too high, the object to be formed may be damaged, or the desired (small) thickness of the layer of slurry cannot be reached.

Fig. 1 shows a cross sectional view of major components used when making a three dimensional object 5 using additive manufacturing (as shown by the horizontal lines in object 5 being formed). A substrate 2 is provided for holding a predetermined amount of slurry 4, in the embodiment with a separate slurry repellant layer 3. For each layer of the object 5 being formed, the object is brought down towards the substrate 2 and into the slurry 4 until a predetermined layer thickness is achieved. After that, the layer of slurry 4 is exposed to radiation to cure the slurry 4 onto the object being formed.

Thus, in accordance with a first embodiment of the present invention, a method is provided for additive manufacturing of a three dimensional object 5, comprising manufacturing the object 5 by repeatedly providing a predetermined amount of slurry 4 as a layer on a substrate 2 and curing the layer onto the object 5 being formed. The substrate 2 is e.g. transparent or translucent to allow an exposure of the newly formed layer of slurry 4 on the substrate 2 to a suitable radiation dose. A slurry repellant layer 3 is provided on a surface of the substrate 2. The method further comprises pressing the object 5 being formed into the predetermined amount of slurry 4 until a desired thickness of the layer for a next additive manufacturing step is reached. Due to the slurry repellant layer 3 no high downward force (towards the substrate) is needed to be exerted when pushing the object 5 being formed into the fresh layer of slurry 4: using the repellant layer 3 on top of the substrate 2 means that at that side no boundary layer exists anymore (at which the slurry movement would theoretically be zero), allowing the amount of slurry 4 to be pushed away without much effort. This results in less chance of damage etc. to either the substrate 2 or (previously formed layers of) the object 5 being formed (or other parts of the apparatus used).

The slurry repellant layer comprises polytetrafluoroethylene (PTFE) in a specific embodiment, which is easy to add to the substrate 2 as a separate layer. The slurry repellant layer 3 may also be formed as an upper part of the substrate 2 or a physical or chemical structure of the substrate 2. Alternative materials for the slurry repellant layer are e.g. perfluoroalkoxy (PFA) and fluorinated ethylene propylene (FEP). In more general terms, the slurry repellant layer 3 provides a lower surface tension as compared to a regular surface of the substrate 2, in order to allow the slurry 4 to easily be pushed away.

In a further embodiment, the method further comprises agitating the predetermined amount of slurry 4 during pressing of the object 5 being formed into the predetermined amount of slurry 4. This agitation may be advantageous in affecting characteristics of the slurry, such as viscosity, making it more easy to press the object 5 being formed into the slurry 4. Also contact of the previous layer of the object 5 being formed with the fresh layer of slurry is improved.

The agitation comprises an indirect agitation in a further embodiment, e.g. by (ultrasonic) vibration. This can be implemented in a cost effective manner using components which are readily available, such as an ultrasonic transducer.

The desired thickness of the layer of slurry 4 right before exposure is less than 10 µm, e.g. 5 µm. This allows to have radiation (e.g. light) penetrate the entire layer of slurry 4, allowing a proper and sufficient curing of the entire depth of the new layer, even when a slurry 4 is used having particles which reflect or diffuse the radiation during exposure (e.g. metal particles). Normally, creating such a thin layer of slurry 4 between two surfaces (bottom of object 5 being formed and top of substrate 2) would require a high force to squeeze the slurry out. With the present invention embodiments (using repellant layer 3) this is made possible, and can even be further enhanced when using the agitation of the predetermined amount of slurry 4.

The present invention embodiments are particularly advantageous when using a highly viscous slurry, e.g. a mixture of curable resin with a high load of particles, e.g. metal particles. Thus, the slurry 4 is highly viscous in a further embodiment, e.g. having a viscosity in the range of 20-500 Poise.

In further embodiments, the slurry 4 comprises metal particles, or precursors of metal particles. Examples are e.g. tungsten or titanium particles, but also precursors of metals can be used, such as but not limited to metal hydrides or metallic-organic compounds.

In further embodiments, a cross sectional surface of the object 5 being formed is more than 1cm², e.g. more than 10cm². Although such dimensions implicate that relatively a lot of slurry 4 needs to be pushed aside to obtain the desired thickness of the layer of slurry 4, this is possible using the present invention embodiments.

Fig. 2 shows the cross sectional view of Fig. 1 with further components of an additive manufacturing apparatus for providing a three dimensional object according to a further aspect of this invention. The apparatus comprises an exposure unit 11 arranged to cure a layer of slurry 4 onto an object 5 being formed. A substrate 2 is arranged to receive a predetermined amount of slurry 4 and to position the predetermined amount of slurry 4 to an exposure position associated with the exposure unit 11. The substrate 2 comprises a slurry repellant layer 3 on a surface of the substrate 2. An object holder is provided for holding the object 5 being formed, wherein the object holder is arranged to press the object 5 being formed towards the substrate 2 into the predetermined amount of slurry 4 until a desired thickness of the layer for a next additive manufacturing step is reached. As in the embodiments described above, the slurry repellant layer 3 comprises polytetrafluoroethylene (PTFE). As discussed above, the slurry repellant layer 3 allows to have very thin layers of slurry 4 for each additive manufacturing step.

Furthermore, the additive manufacturing apparatus may further comprise an agitator system 12 arranged to agitate the predetermined amount of (fresh deposited) slurry 4, e.g. at the same time while pressing the object 5 being formed into the slurry 4. The agitator system 12 may in an embodiment comprise a vibrating member, e.g. an ultrasonic transducer. The vibrating member may be in direct contact with the layer of slurry 4, or may be implemented using an indirect contact, e.g. via the substrate 2 or other intermediate object of the apparatus (e.g. a support plate holding the substrate 2, e.g. when the substrate 2 is implemented as a foil substrate).

The agitator system 12 may also be provided in a more generic additive manufacturing apparatus comprising an exposure unit 11 arranged to cure a layer of slurry onto an object 5 being formed, a substrate 2 arranged to receive a predetermined amount of slurry 4 and to position the predetermined amount of slurry 4 to an exposure position associated with the exposure unit 11, and an object holder for holding the object 5 being formed. The agitator system 12 may also be used in other phases of the manufacturing process of the three dimensional object, e.g. to facilitate lifting the intermediate three dimensional object 5 after curing the resin layer.

In an advantageous embodiment, a support plate is provided for supporting the substrate 2, and comprises the agitator system 12 (or resin viscosity reduction unit 12), which allows the layer of curable resin 4 to attain a predetermined viscosity for optimizing the curing process. For example, to manufacture a cross sectional slice of an object 5, a stage holding the (intermediate) object 5 is lowered toward the (foil) substrate 2 and a most recently cured resin layer is pressed into a newly supplied layer of slurry 4. This ensures that the newly supplied layer of slurry 4 attains a desired thickness underneath the object 5 being formed and that the uncured resin between the object 5 and the foil substrate 2 (including the slurry repellant layer 3) is distributed homogenously. Furthermore, altering the viscosity of the curable resin (slurry 4) between the object 5 and the foil substrate 2 minimizes compression forces that have to be applied to press the object 5 into the slurry layer 4, allowing for a more accurate positioning of the stage and object 5 with respect to the foil substrate 2.

Controlling the viscosity of the layer of slurry 4 may be accomplished in several ways. For example, in an embodiment the resin viscosity reduction unit 12 comprises a surface heating device. The surface heating device is arranged to heat the support plate and as a result the foil substrate 2 as well as the layer of slurry 4 disposed thereon. Consequently, the viscosity of the layer of slurry 4 may be lowered such that compression forces of the stage are reduced when the object 5 is lowered into the resin below it. In addition, as the viscosity of the resin is reduced, the layer of slurry 4 between the object 5 and the foil substrate 2 flows in a more homogenous and even fashion.

In a further embodiment, the surface heating device comprises a heated air blower. The heated air blower allows the substrate 2 to be heated from below and/or above. The heated air blower provides fast heating and allows for a heated air flow, wherein a temperature and flow direction of the heated air flow is easily adapted to the object 5 according to atmospheric conditions surrounding the additive manufacturing device 1.

In an even further embodiment, the resin viscosity reducing unit 12 comprises an ultrasonic device, so that the viscosity of the layer of slurry 4 may be modified, e.g. lowered, by imposing high frequency vibrations on the support plate (and/or the stage). That is, the ultrasonic device may be directly connected to the support plate (and/or the stage) to directly impose a high vibration frequency to the layer of slurry 4 so as to achieve a desired change in viscosity of the layer of slurry 4. In an alternative embodiment the resin viscosity reducing unit 12 comprises a vibrating actuator, e.g. a high frequency piezo actuator for vibrating the support plate (and/or the stage 9). The above embodiment of the resin viscosity reducing unit 12 are advantageous in case of non-Newtonian curable resins exhibiting a reduced viscosity when shear rates within the resin are increased, which is often the case for polymer based resins.

As shown in the embodiments as shown in Fig. 2, furthermore a control unit 10 may be provided in contact with the exposure unit 11 and agitator system 12. Also, the control unit 10 may be in communication with the object holder for moving the object 5 being formed in a suitable position during the additive manufacturing process.

The present invention embodiments have been described above with reference to a number of exemplary embodiments as shown in the drawings. Modifications and alternative implementations of some parts or elements are possible, and are included in the scope of protection as defined in the appended claims.

## Claims

1. Method for additive manufacturing of a three dimensional object (5), comprising
manufacturing the object (5) by repeatedly providing a predetermined amount of slurry (4) as a layer on a substrate (2) and curing the layer onto the object (5) being formed, wherein a slurry repellant layer (3) is provided
**characterized in that** the slurry repellant layer (3) is provided on a surface of the substrate (2), and **in that** the method further comprises
pressing the object (5) being formed into the predetermined amount of slurry (4) until a desired thickness of the layer for a next additive manufacturing step is reached, and agitating the predetermined amount of slurry (4) during pressing of the object being formed into the predetermined amount of slurry (4).

2. Method according to claim 1, wherein the slurry repellant layer (3) comprises polytetrafluoroethylene (PTFE).

3. Method according to claim 1 or 2, wherein agitating comprises an indirect agitation, e.g. by vibration.

4. Method according to any one of claims 1-3, wherein the desired thickness of the layer is less than 10 µm, e.g. 5 µm.

5. Method according to any one of claims 1-4, wherein the slurry (4) is highly viscous.

6. Method according to any one of claims 1-5, wherein the slurry (4) comprises metal particles, or precursors of metal particles.

7. Method according to any one of claims 1-6, wherein a cross sectional surface of the object (5) being formed is more than 1cm², e.g. more than 10cm².

8. Additive manufacturing apparatus for providing a three dimensional object, comprising
an exposure unit (11) arranged to cure a layer of slurry onto an object (5) being formed,
a substrate (2) arranged to receive a predetermined amount of slurry (4) and to position the predetermined amount of slurry (4) to an exposure position associated with the exposure unit (11), wherein the substrate (2) comprises a slurry repellant layer (3) on a surface of the substrate (2),
an object holder for holding the object (5) being formed,
**characterized in that** the object holder is arranged to press the object (5) being formed towards the substrate (2) into the predetermined amount of slurry (4) until a desired thickness of the layer for a next additive manufacturing step is reached, and
an agitator system (12) arranged to agitate the predetermined amount of slurry (4).

9. Additive manufacturing apparatus according to claim 8, wherein the slurry repellant layer (3) comprises polytetrafluoroethylene (PTFE).

10. Additive manufacturing apparatus according to claim 8 or 9, wherein the agitator system (12) comprises a vibrating member.

11. Additive manufacturing apparatus according to claim 8 or 9, wherein the agitator system (12) comprises a resin viscosity reducing device.

12. Additive manufacturing apparatus according to claim 11, wherein the resin viscosity reducing device (12) comprises a surface heating device.

13. Additive manufacturing apparatus according to claim 12, wherein the surface heating device comprises a heated air blower.

14. Additive manufacturing apparatus according to claim 12, wherein the resin viscosity reducing device (12) comprises an ultrasonic device.

## Patentansprüche

1. Verfahren zur additiven Herstellung eines dreidimensionalen Objekts (5), umfassend:
Herstellen des Objekts (5) durch wiederholtes Aufbringen einer vorbestimmten Menge an Aufschlämmung (4) als Schicht auf ein Substrat (2), und Aushärten der Schicht auf dem momentan ausgebildeten Objekt (5),
wobei eine aufschlämmungsabweisende Schicht (3) vorgesehen ist,
**dadurch gekennzeichnet, dass** die aufschlämmungsabweisende Schicht (3) auf eine Oberfläche des Substrats (2) aufgebracht ist, und dass das Verfahren weiter umfasst: Drücken des momentan ausgebildeten Objekts (5) in die vorbestimmte Menge an Aufschlämmung (4), bis eine gewünschte Dicke der Schicht für einen nächsten additiven Herstellungsschicht erreicht ist, und Schütteln der vorbestimmten Menge an Aufschlämmung (4) während des Drückens des momentan ausgebildeten Objekts in die vorbestimmte Menge an Aufschlämmung (4).

2. Verfahren nach Anspruch 1, bei dem die aufschlämmungsabweisende Schicht (3) Polytetrafluorethylen (PTFE) aufweist.

3. Verfahren nach Anspruch 1 oder 2, bei dem das Schütteln ein indirektes Schütteln z.B. durch Vibration umfasst.

4. Verfahren nach einem der Ansprüche 1-3, bei dem die gewünschte Dicke der Schicht weniger als 10 µm, z.B. 5 µm beträgt.

5. Verfahren nach einem der Ansprüche 1-4, bei dem die Aufschlämmung (4) hoch viskös ist.

6. Verfahren nach einem der Ansprüche 1-5, bei dem die Aufschlämmung (4) Metallpartikel oder Präkursoren von Metallpartikel aufweist.

7. Verfahren nach einem der Ansprüche 1-6, bei dem eine Querschnittsfläche des momentan ausgebildeten Objekts (5) mehr als 1 cm², z.B. mehr als 10 cm² beträgt.

8. Vorrichtung zur additiven Herstellung zum Ausbilden eines dreidimensionalen Objekts, mit
einer Exponierungseinheit (11), die ausgelegt ist zum Härten einer Schicht einer Aufschlämmung auf einem momentan ausgebildeten Objekt (5), einem Substrat (2), das ausgelegt ist zur Aufnahme einer vorbestimmten Menge an Aufschlämmung (4) und zum Positionieren der vorbestimmten Menge an Aufschlämmung (4) an einer Exponierungsposition, welche der Exponierungseinheit (11) zugeordnet ist, wobei das Substrat (2) eine aufschlämmungsabweisende Schicht (3) auf einer Oberfläche des Substrats (2) aufweist, und mit einem Objekthalter zum Halten des momentan ausgebildeten Objekts (5),
**dadurch gekennzeichnet, dass** der Objekthalter ausgelegt ist zum Drücken des momentan ausgebildeten Objekts (5) zu dem Substrat (2) hin in die vorbestimmte Menge an Aufschlämmung (4), bis eine gewünschte Dicke der Schicht für einen nächsten additiven Herstellungsschicht erreicht ist, und dass ein Schüttelsystem (12) zum Schütteln der vorbestimmten Menge an Aufschlämmung (4) ausgelegt ist.

9. Vorrichtung zur additiven Herstellung nach Anspruch 8, bei der die aufschlämmungsabweisende Schicht (3) Polytetrafluorethylen (PTFE) aufweist.

10. Vorrichtung zur additiven Herstellung nach Anspruch 8 oder 9, bei der das Schüttelsystem (12) ein Vibrationsteil aufweist.

11. Vorrichtung zur additiven Herstellung nach Anspruch 8 oder 9, bei der das Schüttelsystem (12) eine Vorrichtung zum Reduzieren von Harzviskosität aufweist.

12. Vorrichtung zur additiven Herstellung nach Anspruch 11, bei der die Vorrichtung (12) zum Reduzieren von Harzviskosität eine Oberflächenheizvorrichtung aufweist.

13. Vorrichtung zur additiven Herstellung nach Anspruch 12, bei der die Oberflächenheizvorrichtung ein Heizluftgebläse aufweist.

14. Vorrichtung zur additiven Herstellung nach Anspruch 12, bei der die Vorrichtung (12) zum Reduzieren von Harzviskosität eine Ultraschallvorrichtung aufweist.

## Revendications

1. Procédé de fabrication additive d'un objet tridimensionnel (5), comprenant
la fabrication de l'objet (5) par apport de manière répétée d'une quantité prédéterminée de barbotine (4) utilisée comme couche sur un substrat (2) et le durcissement de la couche sur l'objet (5) en cours de formation, dans lequel une couche de répulsion de barbotine (3) est prévue, **caractérisé en ce que** la couche de répulsion de barbotine (3) est prévue sur une surface du substrat (2), et **en ce que** le procédé comprend en outre
le pressage de l'objet (5) en cours de formation dans la quantité prédéterminée de barbotine (4) jusqu'à ce qu'une épaisseur souhaitée de la couche pour une étape de fabrication additive suivante soit atteinte, et
l'agitation de la quantité prédéterminée de barbotine (4) pendant le pressage de l'objet en cours de formation dans la quantité prédéterminée de barbotine (4).

2. Procédé selon la revendication 1, dans lequel la couche de répulsion de barbotine (3) comprend du polytétrafluoroéthylène (PTFE).

3. Procédé selon la revendication 1 ou 2, dans lequel l'agitation comprend une agitation indirecte, par exemple par vibration.

4. Procédé selon l'une quelconque des revendications 1 à 3, dans lequel l'épaisseur souhaitée de la couche est inférieure à 10 µm, par exemple 5 µm.

5. Procédé selon l'une quelconque des revendications 1 à 4, dans lequel la barbotine (4) est hautement visqueuse.

6. Procédé selon l'une quelconque des revendications 1 à 5, dans lequel la barbotine (4) comprend des particules métalliques, ou des précurseurs de particules métalliques.

7. Procédé selon l'une quelconque des revendications 1 à 6, dans lequel une surface en coupe transversale de l'objet (5) en cours de formation est supérieure à 1 cm², par exemple supérieure à 10 cm².

8. Appareil de fabrication additive pour produire un objet tridimensionnel, comprenant
une unité d'exposition (11) conçue pour durcir une couche de barbotine sur un objet (5) en cours de formation, un substrat (2) conçu pour recevoir une quantité prédéterminée de barbotine (4) et pour positionner la quantité prédéterminée de barbotine (4) à une position d'exposition associée à l'unité d'exposition (11), dans lequel le substrat (2) comprend une couche de répulsion de barbotine (3) sur une surface du substrat (2),
un porte-objet destiné à porter l'objet (5) en cours de formation,
**caractérisé en ce que** le porte-objet est conçu pour presser l'objet (5) en cours de formation en direction du substrat (2) dans la quantité prédéterminée de barbotine (4) jusqu'à ce qu'une épaisseur souhaitée de la couche pour une prochaine étape de fabrication additive soit atteinte, et
un système d'agitation (12) conçu pour agiter la quantité prédéterminée de barbotine (4).

9. Appareil de fabrication additive selon la revendication 8, dans lequel la couche de répulsion de barbotine (3) comprend du polytétrafluoroéthylène (PTFE).

10. Appareil de fabrication additive selon la revendication 8 ou 9, dans lequel le système d'agitation (12) comprend un élément vibrant.

11. Appareil de fabrication additive selon la revendication 8 ou 9, dans lequel le système d'agitation (12) comprend un dispositif de réduction de viscosité de résine.

12. Appareil de fabrication additive selon la revendication 11, dans lequel le dispositif de réduction de viscosité de résine (12) comprend un dispositif de chauffage de surface.

13. Appareil de fabrication additive selon la revendication 12, dans lequel le dispositif de chauffage de surface comprend un souffleur d'air chauffé.

14. Appareil de fabrication additive selon la revendication 12, dans lequel le dispositif de réduction de viscosité de résine (12) comprenant un dispositif à ultrasons.
